# NOUVEAU FASCICULE DE BREVET EUROPEEN

(11) **EP 0 482 322 B2**
(45) Date de publication et mention de la décision concernant l'opposition: **11.03.1998**
(45) Mention de la délivrance du brevet: 01.03.1995
(21) Numéro de dépôt: 91114882.3
(22) Date de dépôt: 04.09.1991
(51) Int. Cl.: A23B 7/10, A23B 7/155

(54) **Produit alimentaire à longue conservation**
Nahrungsmittel mit langer Haltbarkeit
Food product with long preservation

(30) Priorité: 28.09.1990 CH 3130/90
(43) Date de publication de la demande: 29.04.1992
(73) Titulaire: SOCIETE DES PRODUITS NESTLE S.A., 1800 Vevey (CH)
(72) Inventeur: Buhler, Marcel, CH-1111 Tolochenaz (CH); Ho Dac, Thang, CH-1052 Le Mont-s/Lazusanne (CH); Hose, Hugh, CH-1436 Treycovagnes (CH); Wood, Robert Dustan, CH-1010 Lausanne (CH)

(56) Documents cités:
- EP-A- 0 378 012
- FR-A- 1 374 435
- GB-A- 883 424
- GB-A- 1 239 765
- GB-A- 2 098 850
- US-A- 3 403 032
- US-A- 3 420 676
- US-A- 3 480 448
- US-A- 3 891 771
- US-A- 4 234 934
- DERWENT FILE SUPPLIER JAPS, PATENT OFFICE OF JAPAN, Tokyo, JP,& JP-A-62 282 576 (N. ETSUKO) 02-06-1986
- DERWENT FILE SUPPLIER WPI(L), 1982, AN=82-08808E [05], Derwent PublicationsLtd, Londres, GB; & JP-A-56 146 742 (AJINOMOTO) 17-12-1981
- DERWENT FILE SUPPLIER JAPS, PATENT OFFICE OF JAPAN, Tokyo, JP;& JP-A-60 207 561 (I. YUKIO) 19-10-1985
- DERWENT FILE SUPPLIER JAPS, PATENT OFFICE OF JAPAN, Tokyo, JP;& JP-A-55 081 541 (H. HAJIME) 19-06-1980
- Use of microbial cultures : vegetable products, by H.P. Fleming et al, Food Technology, vol. 35, n 1, pp. 84-88 (1981)
- "Introductory food science" by Smith & Walters, p. 113
- Latte 2 (9) 531-534, (12) 707
- Milchwissenschaft 1969, 24(1) 28-34, (2) 88-97
- "Microbial ecology of foods", vol. 1, 1980, pp. 109-110

## Description

La présente invention a pour objet un procédé de préparation d'un produit alimentaire à longue conservation comprenant au moins un légume et/ou un fruit ainsi qu'un produit alimentaire obtenu par ce procédé.

Les procédés traditionnels de conservation de produits alimentaires tels que des légumes comprennent notamment la stérilisation en boîte, l'acidification en saumure, ou l'immersion dans du vinaigre ou dans de l'huile, par exemple. Parmi les produits traditionnels obtenus par ces procédés, on peut citer notamment les légumes tels que les petits pois et carottes dits en conserve, la choucroute ou la compote aux raves, les condiments tels que les cornichons ou les oignons au vinaigre, et les champignons ou les coeurs d'artichaut à l'huile, par exemple.

Pour éviter de détériorer les propriétés organoleptiques et/ou physiques de produits alimentaires en les stérilisant par un traitement thermique prolongé à plus de 100°C ou en leur ajoutant des agents de conservation tels que le sel, l'acide acétique ou l'acide benzoïque. GB 1239765 propose de déposer un levain de bactéries lactiques sur la surface intérieure d'un récipient de verre, traiter thermiquement un produit alimentaire à 60-100°C, introduire le produit à cette température dans le récipient, sceller le récipient, refroidir rapidement à une température de fermentation, incuber le temps nécessaire pour que la fermentation s'achève et refroidir à température ambiante. Ce procédé est difficile à contrôler et des légumes ainsi préparés présentent une saveur acide.

US 3891771 propose de préparer des légumes fermentés du type légumes en saumure acide, plus connus sous la dénomination anglaise de "pickles", par une fermentation rapide qui permet d'éviter l'emploi d'une saumure. Les "pickles" ainsi obtenus présentent une saveur, une couleur et une texture adéquates et peuvent être utilisés comme condiments.

EP 368603 propose de préparer des produits alimentaires, notamment des garnitures à base de viande et de fromage pour feuilletés qui se conservent longtemps à température ambiante, en les traitant thermiquement à une température supérieure à 70°C, en ajustant leur pH à 4,3 -5,4, notamment par addition d'acide lactique, en ajustant leur activité de l'eau à une valeur de préférence inférieure à 0,92 et en les conditionnant sous atmosphère inerte en emballage étanche.

GB-A-2098850 décrit un procédé de stérilisation de légumes, en particulier de pommes de terre, comprenant des étapes successives de légère pasteurisation à 75-85°C, conditionnement sous vide, incubation à 25-35°C pour faire se développer des bactéries présentes sous forme de spores pasteurisation à 85-90°C et refroidissement.

US-A-3403032 décrit un procédé de préparation de concombres en saumure acide ("pickles"), comprenant des étapes successives de pasteurisation, égouttage, conditionnement en saumure dans des récipients stérilisés inoculation avec une culture de bactéries lactiques et incubation.

US-A-3420676 décrit un procédé de préparation de jus de légume fermenté comprenant les étapes successives de réduction du légume en purée, fermentation lactique de la purée, mélange de la purée fermentée avec de la purée non fermentée, pressage et pasteurisation du jus recueilli.

La présente invention a pour but de proposer un procédé de préparation d'un produit alimentaire à longue conservation consistant principalement en un légume et/ou un fruit et/ou un mélange de légumes et/ou de fruits dont la saveur, la couleur et la texture soient comparables à celles que peuvent présenter les mêmes légumes et/ou fruits frais apprêtés par la ménagère à la vapeur ou dans l'eau bouillante, par exemple.

A cet effet, dans le procédé de préparation d'un produit alimentaire à longue conservation selon la présente invention, on procède comme défini dans les revendications, notamment
i) on traite thermiquement au moins un légume et/ou un fruit durant 1-15 min à 80-95°C;
ii) on le refroidit et on le soumet, en présence d'eau, à une fermentation avec une bactérie lactique à 15-45°C durant 10 h à 3 d jusqu'à pH 3,1-4,4; et
iii) on le pasteurise durant 2-30 min à 80-110°C.

On a constaté avec surprise que ce procédé permet bien de préparer un légume et/ou un fruit ou un mélange de légumes et/ou de fruits présentant les qualités souhaitées, notamment une texture croquante que l'on peut ajuster à loisir alors qu'on la détruirait par une stérilisation traditionnelle, une couleur de produit frais apprêté par la ménagère et une saveur agréable dans laquelle l'acidité est imperceptible.

Pour mettre en oeuvre le procédé selon la présente invention, on peut utiliser tout légume comestible, qu'il s'agisse de graine, racine, tubercule, tige, feuille fleur ou fruit, par exemple. On peut également utiliser certains fruits comestibles,qui se distinguent des légumes par leur richesse en sucre, pour autant que leur texture le permette. On peut enfin utiliser tout champignon supérieur comestible, notamment tout champignon de culture tel que agaricus bisporus, pleurotus ostreatus ou lentinus edodes, par exemple. Pour simplifier le présent exposé, on admettra que les champignons supérieurs comestibles peuvent être considérés comme compris dans les légumes.

De préférence, on découpe le légume et/ou le fruit en morceaux s'il présente une relativement grande dimension. C'est ainsi qu'on peut découper des carottes en rondelles, des pommes de terre en bâtonnets, des céleris en dés ou des poireaux en lanière, ou émincer des choux, des oignons ou des champignons, par exemple.

Après avoir lavé, paré et, le cas échéant, découpé le légume et/ou le fruit en morceaux, on le traite donc thermiquement durant 1-15 min à 80-95°C, une durée située dans le bas du domaine considéré correspondant de préférence à une température située dans le haut du domaine considéré et inversement. On peut réaliser ce traitement par immersion dans une eau portée à cette température, ou par chauffage à la vapeur ou aux microondes, par exemple.

Si l'on traite thermiquement le légume et/ou le fruit durant moins d'une minute ou à une température inférieure à 80°C, on risque de ne pas détruire ou inactiver suffisamment des enzymes telles que la peroxydase, ou la pectine esterase, par exemple, ce qui peut provoquer une modification, notamment un ramollissement de la texture du légume et/ou du fruit. Si l'on traite thermiquement le légume et/ou le fruit durant plus de 15 min ou à une température supérieure à 95°C, on risque de ne pas pouvoir conserver la texture croquante désirée.

On refroidit ensuite le légume et/ou le fruit, de préférence directement à la température de fermentation, et on le soumet donc, en présence d'eau, à une fermentation avec une bactérie lactique à environ 15-45°C durant 10 h à 3 d jusqu'à pH 3,1-4,4. On peut choisir la bactérie lactique, autrement dit une bactérie productrice d'acide lactique, parmi des souches du commerce couramment utilisées pour la préparation de produits fermentés tels qu'un salami ou une choucroute, par exemple. On peut utiliser notamment une souche de Lactobacillus plantarum, de Leuconostoc mesenteroides ou de Lactobacillus brevis et réaliser la fermentation à une température de environ 20-35°C, par exemple.

Pour réaliser le refroidissement puis la fermentation, on peut par exemple immerger le légume et/ou le fruit dans de l'eau portée à la température de fermentation désirée, inoculer avec un levain de la bactérie choisie et laisser fermenter. On réalise de préférence la fermentation en présence d'une quantité d'eau au moins telle que le légume et/ou le fruit en soit complètement recouvert, notamment une quantité d'eau équivalant à environ 0,8-4 fois le volume du légume et/ou du fruit. On peut ajouter à cette eau, avant la fermentation, jusqu'à environ 2% de chlorure de sodium, et, notamment lorsqu'un légume est relativement pauvre en sucre fermentescible, jusqu'à environ 2% de saccharose, de glucose ou de fructose, par exemple.

Si l'on réalise la fermentation à une température inférieure à 15°C ou durant moins de 10 h, on risque de ne pas obtenir l'acidification souhaitée, la bactérie n'étant pas suffisamment active durant suffisamment de temps.

Si l'on réalise la fermentation à une température supérieure à 40°C ou durant plus de 3 jours, on risque de ne pas obtenir la fermentation désirée et de favoriser le travail de microorganismes ou d'enzymes indésirables.

En ce qui concerne le domaine de pH, la limite inférieure de 3,1 correspond à une valeur au-dessous de laquelle les bactéries lactiques ne sont pratiquement plus actives. Par contre, si l'on ne laisse pas la fermentation, autrement dit l'acidification, se pour suivre au moins jusqu'à pH 4,4, on risque de ne pas réunir les conditions nécessaires à l'inhibition des spores de microorganismes sporulants, même en réalisant par la suite une pasteurisation.

Dans une première forme de réalisation du procédé selon la présente invention, on lave le légume et/ou le fruit obtenu à l'étape de fermentation ii) tout en ajustant son pH à 3,8-4,4, on l'égoutte, on le conditionne en emballage portion et l'on réalise la pasteurisation de l'étape iii) après conditionnement. Cette première forme de réalisation convient particulièrement à la préparation d'un produit alimentaire à longue conservation comprenant un seul légume et/ou fruit.

Dans une deuxième forme de réalisation du procédé selon la présente invention, on soumet à la pasteurisation de l'étape iii) ledit légume et/ou ledit fruit avec au moins une partie d'une eau de fermentation obtenue à l'étape ii) et on le conditionne aseptiquement en emballage stérile de stockage avec au moins une partie de cette eau. Cette deuxième forme de réalisation se prête à la préparation d'un produit alimentaire à longue conservation comprenant au moins deux légumes et/ou fruits.

C'est ainsi que l'on soumet séparément au moins deux légumes et/ou fruits différents au traitement thermique, à la fermentation et à la pasteurisation des étapes i) à iii), on conditionne aseptiquement chacun des légumes et/ou fruits obtenus à l'étape iii) en emballage stérile de stockage avec une partie au moins de son eau de fermentation, on préleve simultanément au moins deux légumes et/ou fruits de leurs emballages de stockage respectifs, on les lave tout en ajustant leur pH à 3,8-4,4, on les égoutte, on les mélange, on conditionne le mélange en emballage portion et l'on pasteurise le mélange conditionné durant 2-30 min à 80-110°C, une durée située dans le bas du domaine considéré correspondant de préférence à une température située dans le haut du domaine considéré et inversement.

Dans une troisième forme de réalisation du procédé selon la présente invention, on lave le légume et/ou le fruit obtenu à l'étape de fermentation ii) tout en ajustant son pH à 3,8-4,4, on le soumet à la pasteurisation de l'étape iii), et on le conditionne aseptiquement en emballage stérile de stockage. Cette troisième forme de réalisation se prête également à la préparation d'un produit alimentaire à longue conservation comprenant au moins deux légumes et/ou fruits.

C'est ainsi que l'on soumet séparément au moins deux légumes et/ou fruits différents au traitement thermique, à la fermentation et à la pasteurisation des étapes i) à iii), on conditionne aseptiquement chacun des deux légumes et/ou fruits obtenus à l'étape iii) en emballage stérile de stockage, on préleve simultanément au moins deux légumes et/ou fruits de leurs emballages de stockage respectifs, on les égoutte, on les mélange, on conditionne le mélange en emballage portion et l'on pasteurise le mélange conditionné durant 2-30 min à 80-110°C, une durée située dans le bas du domaine considéré correspondant de préférence à une température située dans le haut du domaine considéré et inversement.

Dans la deuxième forme de réalisation, c'est ladite eau de fermentation qui sert de milieu de conservation, alors que dans la troisième forme de réalisation c'est une eau dans laquelle le légume et/ou fruit est maintenu après l'opération du lavage et dont le pH a donc été ajusté à 3,8-4,4. Dans ces deux formes de réalisation, on conditionne de préférence le légume et/ou le fruit en emballage stérile avec une quantité d'eau équivalant à environ 0,5-2 fois son volume.

Lesdites deuxième et troisième forme de réalisation se prêtent donc à la préparation d'un produit alimentaire à longue conservation comprenant au moins deux légumes et/ou fruits, notamment des légumes et/ou fruits qui ne poussent pas nécessairement au même endroit ni à la même saison. Chacun peut donc être mis en emballage stérile de stockage après qu'il a été fraîchement récolté, et le mélange peut être réalisé par la suite au cours de l'année.

Dans les trois formes de réalisation du procédé selon la présente invention, le ou les légumes et/ou fruits sont donc sournis, soit avant le conditionnement en emballage stérile de stockage, soit avant l'égouttage et le conditionnement en emballage portion, à une opération de lavage avec ajustement du pH à 3,8-4,4. Cette opération a pour but d'une part d'éliminer l'eau de fermentation qui peut présenter une saveur particulière et d'autre part d'ajuster le pH à une valeur standard que l'on désire conserver dans le produit final. Si l'on ajuste ce pH à une valeur inférieure à 3,8, le ou les légumes et/ou fruits risquent de présenter une saveur acide trop prononcée. Si l'on ajuste ce pH à une valeur supérieure à 4,4, on risque de ne pas réunir les conditions nécessaires à l'inhibition des spores de microorganismes sporulants et à l'inactivation des cellules végétatives, même en réalisant par la suite une pasteurisation. Cet ajustement du pH peut se réaliser par simple contact de l'eau de lavage avec le ou les légumes et/ou fruits, et/ou par addition d'un agent neutralisant tel que l'hydroxyde de sodium, par exemple.

Le procédé selon la présente invention comprend donc une étape de pasteurisation iii) durant 2-30 min à 80-110°C. Dans la première forme de réalisation cette étape est réalisée sur le légume et/ou le fruit conditionné directement dans son emballage portion final. Dans les deuxième et troisième formes de réalisations, cette étape est réalisée sur chaque légume et/ou fruit avant son conditionnement aseptique en emballage stérile de stockage. Elle est réalisée de préférence en continu sur un mélange pompable du légume et/ou du fruit et de son eau de fermentation ou de l'eau où il est maintenu après l'opération de lavage et ajustement du pH, ce mélange comprenant une quantité d'eau équivalant à environ 0,8-4 fois le volume du légume et/ou du fruit. Pour ces deux formes de réalisation, une seconde opération de pasteurisation durant 2-30 min à 80-110°C est donc également prévue et réalisée sur le produit final, à savoir un mélange d'au moins deux légumes et/ou fruits, dans son emballage portion final.

Si l'on réalise cette ou ces pasteurisations durant moins de 2 min ou à moins de 80°C, on risque de ne pas réunir les conditions nécessaires à l'inhibition des spores de microorganismes sporulants et à l'inactivation de cellules végétatives, même en ayant réalisé auparavant une acidification. Si l'on réalise cette ou ces pasteurisations durant plus de 30 min ou à plus de 110°C, on risque d'amollir la texture du ou des légumes et/ou fruits de sorte qu'elle ne soit plus comparable à celle que peuvent présenter le ou les mêmes légumes et/ou fruits apprêtés par la ménagère à la vapeur ou dans l'eau bouillante, par exemple.

Dans le présent contexte, un emballage stérile de stockage adéquat peut être réalisé sous forme d'un sac en matière plastique ou en film composite stérilisable à la vapeur ou par irradiation, par exemple. De même, un emballage portion peut être réalisé sous forme de sachet ou barquette en matière plastique ou en film composite, ou d'un bocal en verre, par exemple, présentant un moyen de scellage ou fermeture hermétique adéquat.

Les exemples ci-après sont présentés à titre d'illustration du procédé et du produit selon la présente invention. Les pourcentages et parties y sont donnés en poids sauf indication contraire.

### Exemple 1

On pare des choux-fleurs et on les découpe en morceaux dont la plus grande dimension soit de environ 1-2 cm. On les blanchit durant 2 min dans de l'eau à 90°C.

On les refroidit à environ 32-35°C tout en les plongeant dans leur équivalent en volume d'une eau contenant 20 g de chlorure de sodium et 0.5% de glucose par litre. On inocule le mélange d'eau et de chou-fleur avec un levain de Lactobacillus plantarum du commerce et on le laisse fermenter à environ 32-35°C durant environ 24 h jusqu'à pH 3,4.

On égoutte les choux-fleurs, on les lave à grande eau, puis on les laisse reposer dans leur équivalent en volume d'eau durant 30 min après lesquelles le mélange de choux-fleurs et d'eau présente un pH de environ 4,0. On égoutte les choux-fleurs, on les conditionne en barquettes portion plastiques à couvercle thermoscellé et on les y pasteurise durant 10 min à 90°C.

On ouvre quelques barquettes juste après la pasteurisation. On constate que le produit obtenu présente une texture croquante, une saveur agréable et une couleur blanche. En ouvrant quelques barquettes à intervalles réguliers, on constate que le produit ne perd pratiquement rien de ces qualités après une conservation de plusieurs mois, voire une année à température ambiante.

### Exemple 2

On pare des carottes et on les découpe en rondelles de 2-3 mm d'épaisseur. On les blanchit durant 1 min dans une eau à 95°C. On les refroidit à environ 25°C tout en les plongeant dans une quantité d'eau équivalant à environ 0,8-1 fois leur volume. On les inocule avec un levain de Lactobacillus plantarum du commerce et on les laisse fermenter à température ambiante durant 2 d jusqu'à pH 3,6.

On égoutte les carottes, on les lave à grande eau, puis on les laisse reposer dans leur équivalent en volume d'eau durant environ 1 h après laquelle le mélange de carottes et d'eau présente un pH de environ 4,2. On pasteurise le mélange en continu durant 3 min à 90°C puis on le conditionne aseptiquement en sacs plastiques stériles de stockage thermoscellés.

Le produit ainsi préparé et conditionné se conserve durant plusieurs mois et peut être consommé tel quel après égouttage, ou en mélange avec d'autres légumes et/ou fruits, après égouttage et reconditionnement en emballage portion, par exemple. Il présente une texture croquante, une couleur rouge-orange et une saveur agréable.

### Exemple 3

On prépare un produit à longue conservation de la manière décrite à l'exemple 2, à l'exception du fait que l'on ne lave pas les carottes après la fermentation, mais qu'on les pasteurise directement avec leur eau de fermentation avant de les conditionner aseptiquement en sacs plastiques stériles de stockage thermoscellés.

Le produit ainsi préparé et conditionné se conserve durant plusieurs mois et peut être consommé en mélange avec d'autres légumes et/ou fruits, après lavage, égouttage et reconditionnement en emballage portion, par exemple.

### Exemple 4

On prépare de la manière décrite à l'exemple 2 divers légumes et/ou fruits et on en prépare divers mélanges que l'on conditionne et pasteurise en sachets plastiques transparents thermoscellés. Les conditions de préparation de ces légumes et/ou fruits, ainsi que de leurs mélanges sont réunies dans le tableau ci-après:

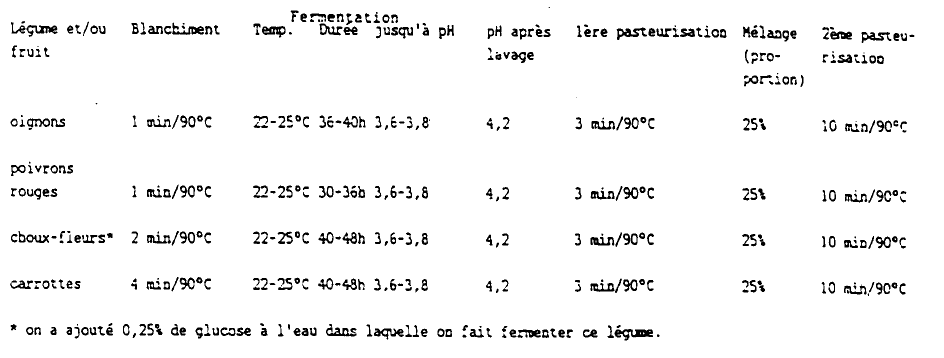

Le produit ainsi préparé et conditionné se conserve plusieurs mois et peut être consommé tel quel. Chacun des quatre légumes et/ou fruits présente une texture croquante, une couleur de produit frais après cuisson et une saveur authentique agréable.

### Exemple 5

On prépare de la manière décrite à l'exemple 3 divers légumes et/ou fruits et on en prépare, après égouttage et lavage, divers mélanges que l'on conditionne et pasteurise en sachets plastiques transparents thermoscellés. Les conditions de préparation de ces légumes et/ou fruits, ainsi que de leurs mélanges sont réunies dans le tableau ci-après.

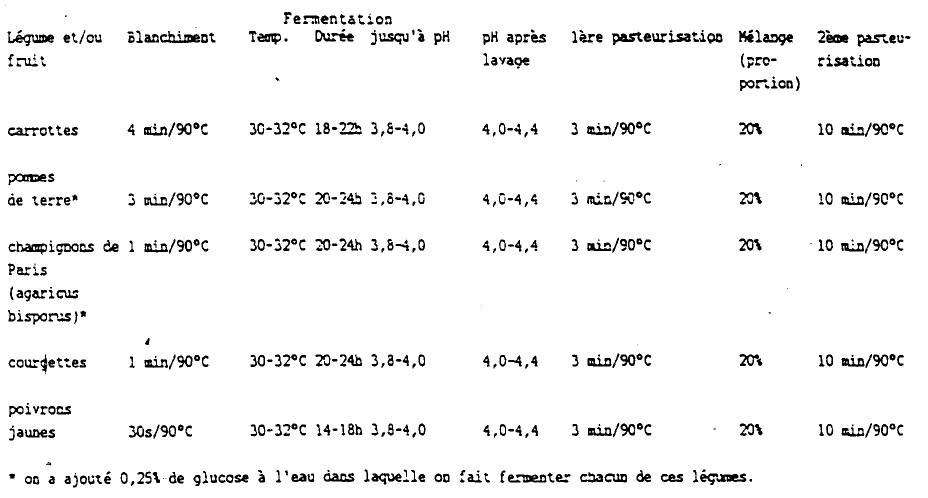

Le produit ainsi préparé et conditionné se conserve plusieurs mois et peut être consommé tel quel. Chacun des cinq légumes et/ou fruits y présente une teneur croquante, une couleur de produit frais après cuisson et une saveur authentique agréable.

## Revendications

1. Procédé de préparation d'un produit alimentaire à longue conservation comprenant au moins un légume et/ou un fruit, dans lequel:
i) on traite thermiquement au moins un légume et/ou un fruit durant 1-15 min à 80-95°C;
ii) on le refroidit et on le soumet, en présence d'eau, à une fermentation avec une bactérie lactique à 15 -45°C durant 10 h à 3 d jusqu'à pH 3,1-4,4;
- on égoutte le légume et/ou le fruit obtenu à l'étape ii), on le lave tout en ajustant son pH à 3,8-4,4, on le conditionne en emballage portion et
iii) on le pasteurise durant 2-30 min à 80-110°C.

2. Procédé de préparation d'un produit alimentaire à longue conservation comprenant au moins un légume et/ou un fruit, dans lequel:
i) on traite thermiquement au moins un légume et/ou un fruit durant 1-15 min à 80-95°C;
ii) on le refroidit et on le soumet, en présence d'eau, à une fermentation avec une bactérie lactique à 15 -45°C durant 10 h à 3 d jusqu'à pH 3,1-4,4;
iii) on le pasteurise durant 2-30 min à 80-110°C;
on soumet à la pasteurisation de l'étape iii) ledit légume et/ou ledit fruit avec au moins une partie d'une eau de fermentation obtenue à l'étape ii); et dans lequel on soumet séparément au moins deux légumes et/ou fruits différents aux traitements des étapes i) à iii), on conditionne aseptiquement chacun des légumes et/ou fruits obtenus à l'étape iii) en emballage stérile de stockage avec une partie au moins de son eau de fermentation, on prélève simultanément au moins deux légumes et/ou fruits de leurs emballages de stockage respectifs, on les égoutte, on les lave tout en ajustant leur pH à 3,8-4,4, on les mélange, on conditionne le mélange en emballage portion et l'on pasteurise le mélange conditionné durant 2-30 min à 80-110°C.

3. Procédé de préparation d'un produit alimentaire à longue conservation comprenant au moins un légume et/ou un fruit, dans lequel:
i) on traite thermiquement au moins un légume et/ou un fruit durant 1-15 min à 80-95°C;
ii) on le refroidit et on le soumet, en présence d'eau, à une fermentation avec une bactérie lactique à 15 -45°C durant 10 h à 3 d jusqu'à pH 3,1-4,4;
- on égoutte le légume et/ou le fruit obtenu à l'étape ii), on le lave tout en ajustant son pH à 3,8-4,4
iii) on le pasteurise durant 2-30 min à 80-110°C; et
dans lequel on soumet séparément au moins deux légumes et/ou fruits différents aux traitements des étapes i) à iii), on conditionne aseptiquement chacun des deux légumes et/ou fruits obtenus à l'étape iii) en emballage stérile de stockage, on prélève simultanément au moins deux légumes et/ou fruits de leurs emballages de stockage respectifs, on les mélange, on conditionne le mélange en emballage portion et l'on pasteurise le mélange conditionné durant 2-30 min à 80-110°C.

## Claims

1. Process for the preparation of a long-life food product comprising at least one vegetable and/or one fruit, wherein:
i) at least one vegetable and/or one fruit is heat-treated for 1 to 15 mins. at 80 to 95°C;
ii) it is cooled and subjected, in the presence of water, to fermentation with a lactic bacterium at 15 to 45°C for 10 hrs. to 3 days until a pH of 3.1 to 4.4 is reached;
- the vegetable and/or fruit obtained in stage ii) is drained, is washed while at the same time adjusting its pH to 3.8 to 4.4, is packaged in portion packaging and
iii) is pasteurized for 2 to 30 mins. at 80 to 110°C.

2. Process for the preparation of a long-life food product comprising at least one vegetable and/or one fruit, wherein:
i) at least one vegetable and/or one fruit is heat-treated for 1 to 15 mins. at 80 to 95°C;
ii) it is cooled and subjected, in the presence of water, to fermentation with a lactic bacterium at 15 to 45°C for 10 hrs. to 3 days until a pH of 3.1 to 4.4 is reached;
iii) it is pasteurized for 2 to 30 mins. at 80 to 110°C;
- the said vegetable and/or the said fruit is subjected, with at least part of a fermentation water obtained in stage ii), to the pasteurization of stage iii); and
wherein at least two different vegetables and/or fruits are separately subjected to the treatments of stages i) to iii), each of the vegetables and/or fruits obtained in stage iii) is aseptically packaged in sterile storage packaging with at least part of its fermentation water, at least two vegetables and/or fruits are simultaneously taken from their respective storage packagings, are drained, are washed while at the same time adjusting their pH to 3.8 to 4.4, and are mixed, the mixture is packaged in portion packaging and the packaged mixture is pasteurized for 2 to 30 mins. at 80 to 110°C.

3. Process for the preparation of a long-life food product comprising at least one vegetable and/or one fruit, wherein:
i) at least one vegetable and/or one fruit is heat-treated for 1 to 15 mins. at 80 to 95°C;
ii) it is cooled and subjected, in the presence of water, to fermentation with a lactic bacterium at 15 to 45°C for 10 hrs. to 3 days until a pH of 3.1 to 4.4 is reached;
- the vegetable and/or fruit obtained in stage ii) is drained and is washed while at the same time adjusting its pH to 3.8 to 4.4;
iii) it is pasteurized for 2 to 30 mins. at 80 to 110°C; and
wherein at least two different vegetables and/or fruits are separately subjected to the treatments of stages i) to iii), each of the two vegetables and/or fruits obtained in stage iii) is aseptically packaged in sterile storage packaging, at least two vegetables and/or fruits are simultaneously taken from their respective storage packagings and are mixed, the mixture is packaged in portion packaging and the packaged mixture is pasteurized for 2 to 30 mins. at 80 to 110°C.

## Patentansprüche

1. Verfahren zum Herstellen eines Nahrungsmittelproduktes zur langen Aufbewahrung mit zumindest einem Gemüse und/oder einer Frucht, bei welchem:
i) zumindest ein Gemüse und/oder eine Frucht über 1-15 min auf 80-95°C thermisch behandelt wird;
ii) das Gemüse bzw. die Frucht abgekühlt und in Anwesenheit von Wasser einer Fermentation mit einem Milchsäurebakterium auf 15-45°C über 10 Stunden bis 3 Tage bis auf einen pH-Wert von 3,1-4,4 unterzogen wird;
- das Gemüse und/oder die Frucht, welche(s) im Schritt ii) erhalten worden ist, abtropfen gelassen wird, gewaschen wird, wobei sein bzw. ihr pH-Wert auf 3,8-4,4 eingestellt wird, und portionsweise verpackt wird, und
iii) das Gemüse bzw. die Frucht über 2-30 min auf 80-110°C pasteurisiert wird.

2. Verfahren zum Herstellen eines Nahrungsmittelproduktes zur langen Aufbewahrung mit zumindest einem Gemüse und/oder einer Frucht, bei welchem:
i) zumindest ein Gemüse und/oder eine Frucht über 1-15 min auf 80-95°C thermisch behandelt wird;
ii) das Gemüse bzw. die Frucht abgekühlt und in Anwesenheit von Wasser einer Fermentation mit einem Milchsäurebakterium auf 15-45°C über 10 Stunden bis 3 Tage bis auf einen pH-Wert von 3,1-4,4 unterzogen wird;
iii) das Gemüse bzw. die Frucht über 2-30 min auf 80-110°C pasteurisiert wird;
- das Gemüse und/oder die Frucht dem Pasteurisieren des Schrittes iii) mit zumindest einem Teil des im Schritt ii) erhaltenen Fermentationswassers unterzogen wird; und wobei zumindest zwei unterschiedliche Gemüse und/oder Früchte getrennt den Behandlungen der Schritte i) bis iii) unterzogen werden, jede(s) der im Schritt iii) erhaltenen Gemüse und/oder Früchte aseptisch in steriler Lagerverpackung mit zumindest einem Teil seines bzw. ihres Fermentationswassers verpackt wird, gleichzeitig zumindest zwei Gemüse und/oder Früchte aus ihren jeweiligen Lagerverpackungen entnommen werden, abtropfen gelassen werden, gewaschen werden, wobei ihr pH-Wert auf 3,8-4,4 eingestellt wird, gemischt werden, die Mischung portionsweise verpackt wird, und die verpackte Mischung über 2-30 min auf 80-110°C pasteurisiert wird.

3. Verfahren zum Herstellen eines Nahrungsmittelproduktes zur langen Aufbewahrung mit zumindest einem Gemüse und/oder einer Frucht, bei welchem:
i) zumindest ein Gemüse und/oder eine Frucht über 1-15 min auf 80-95°C thermisch behandelt wird;
ii) das Gemüse bzw. die Frucht abgekühlt und in Anwesenheit von Wasser einer Fermentation mit einem Milchsäurebakterium auf 15-45°C über 10 Stunden bis 3 Tage bis auf einen pH-Wert von 3,1-4,4 unterzogen wird;
- das Gemüse und/oder die Frucht, welche(s) im Schritt ii) erhalten worden ist, abtropfen gelassen wird und gewaschen wird, wobei sein bzw. ihr pH-Wert auf 3,8-4,4 eingestellt wird;
iii) das Gemüse bzw. die Frucht über 2-30 min auf 80-110°C pasteurisiert wird; und
wobei zumindest zwei unterschiedliche Gemüse und/oder Früchte den Behandlungen der Schritte i) bis iii) unterzogen werden, jede(s) der beiden im Schritt iii) erhaltenen Gemüse und/oder Früchte aseptisch in steriler Lagerverpackung verpackt wird, gleichzeitig zumindest zwei Gemüse und/oder Früchte aus ihren jeweiligen Lagerverpackungen entnommen werden, vermischt werden, die Mischung portionsweise verpackt wird, und die verpackte Mischung über 2-30 min auf 80-110°C pasteurisiert wird.
